# EUROPÄISCHE PATENTANMELDUNG

(11) **EP 0 793 386 A2**
(43) Veröffentlichungstag der Anmeldung: **03.09.1997**
(21) Anmeldenummer: 97400456.6
(22) Anmeldetag: 27.02.1997
(51) Int. Cl.: H04N 7/14

(54) **Kommunikationssystem und Übergabeeinrichtung für eine multimediale Kommunikation**

(30) Priorität: 27.02.1996 DE 19607236
(71) Anmelder: ALCATEL ALSTHOM COMPAGNIE GENERALE D'ELECTRICITE, 75008 Paris (FR)
(72) Erfinder: Heidemann, Rolf, 71732 Tamm (DE)
(74) Vertreter: Knecht, Ulrich Karl, Dipl.-Ing.

(57) **Zusammenfassung**

Es wird vorgeschlagen, in einem Kommunikationssystem (KS1) mit einem Breitbandübertragungsnetz (KK) und Anschlußmitteln (AM1, AM2) zum Anschluß von Teilnehmerstationen (T1, T2) an das Breitbandübertragungsnetz (KK) ein Reflexionsmittel (RF) anzubringen, das vorgegebene Signale von einer der Teilnehmerstationen (T1, T2) reflektiert, um sie zu einer anderen Teilnehmerstation (T2, T1) weiterzuübertragen, und andere vorgegebene Signale, z. B. für Verteildienste, durchzulassen.

## Beschreibung

Die vorliegende Erfindung betrifft ein Kommunikationssystem gemäß dem Oberbegriff des Patentanpruchs 1 und eine Übergabeeinrichtung dafür gemäß dem Oberbegriff des Patentanspruchs 10.

Ein solches Kommunikationssystem ist aus Kaiser, W., "Interaktive Breitbandkommunikation", Springer-Verlag, Berlin, und andere, 1982, Seiten 66 - 70 bekannt. In dem bekannten Kommunikationssystem sind mehrere Teilnehmer mittels eines Breitbandübertragungsnetzes, das in diesem Falle ein Koaxialkabelnetz ist, mit einer Zentrale verbunden. Die Zentrale bietet Dienste an, die von den Teilnehmern abgerufen werden können und an die Teilnehmer verteilt werden. Die Teilnehmer sind durch Anschlußdosen und über Übergabepunkte an das Koaxialkabelnetz angeschlossen. In diesem bekannten Kommunikationssystem werden mehrere Kanäle bereitgestellt, auf denen den Teilnehmern die Informationen von der Zentrale übermittelt werden. Der jeweilige Teilnehmer kann den gewünschten Kanal auswählen. Für einen interaktiven Dialog zwischen einem der Teilnehmer und der Zentrale werden individuelle Rückkanäle vom Teilnehmer zur Zentrale zur Verfügung gestellt. Eine direkte Kommunikation zwischen den Teilnehmern ist nicht möglich.

Aus der vorveröffentlichten Patentanmeldung DE 43 29 173 A1 ist ebenfalls ein Kommunikationssystem bekannt, bei dem Teilnehmer über Anschlußmittel an ein Breitbandübertragungsnetz angeschlossen sind. Die Teilnehmer dieses bekannten Kommunikationssystems können untereinander kommunizieren. Dazu enthält eine dem jeweiligen Teilnehmer zugeordnete Teilnehmeranschlußeinheit ein Mittel zur Abstimmung auf einen bestimmten Kanal, auf dem dem jeweiligen Teilnehmer Informationen von einem anderen Teilnehmer übermittelt werden sollen. Die Abstimmung auf einen Kanal findet aufgrund einer vorher empfangenen Signalisierung statt, mit der der jeweiligen Teilnehmeranschlußeinheit der bestimmte Kanal mitgeteilt wird.

Die Aufgabe der vorliegenden Erfindung ist eine aufwandsarme Ermöglichung einer Kommunikation zwischen Teilnehmerstationen über ein Breitbandübertragungsnetz.

Diese Aufgabe ist durch die technische Lehre des Patentanspruchs 1 oder des Patentanspruchs 10 gelöst.

Hat das erfindungsgemäße Kommunikationssystem einen Übergang zu einem anderen Kommunikationssystem, so wird das Reflexionsmittel vorteilhafterweise an diesem Übergang angebracht.

Ein weiterer Vorteil des erfindungsgemäßen Kommunikationssystems ist eine Verstärkung vom von dem Reflexionsmittel reflektierten Signalen durch einen Verstärker.

Weitere vorteilhafte Ausgestaltungen der Erfindung sind den abhängigen Ansprüchen zu entnehmen.

Im folgenden wird die Erfindung anhand von Ausführungsbeispielen und den Figuren 1 bis 7 beschrieben. Es zeigen:
- Fig. 1: ein erstes Ausführungsbeispiel des erfindungsgemäßen Kommunikationssystems,
- Fig. 2a, b: zwei Beispiele für Frequenzgänge eines Reflexionsfilters,
- Fig. 3: ein zweites Ausführungsbeispiel des erfindungsgemäßen Kommunikationssystems mit mehreren Reflexionsfiltern,
- Fig. 4: ein Beispiel für die Frequenzgänge der mehreren Reflexionsfilter nach Figur 3,
- Fig. 5: ein drittes Ausführungsbeispiel des erfindungsgemäßen Kommunikationssystems mit einem Verstärker,
- Fig. 6: ein Beispiel für die Frequenzgänge des Reflektionsfilters und des dem Verstärker vorgeschalteten Filters nach Figur 5 und
- Fig. 7: ein Ausführungsbeispiel eines Zirkulators mit angeschlossenem Verstärker.

In den Ausführungsbeispielen werden für gleiche oder gleichwirkende Elemente durchweg gleiche Bezugszeichen verwendet.

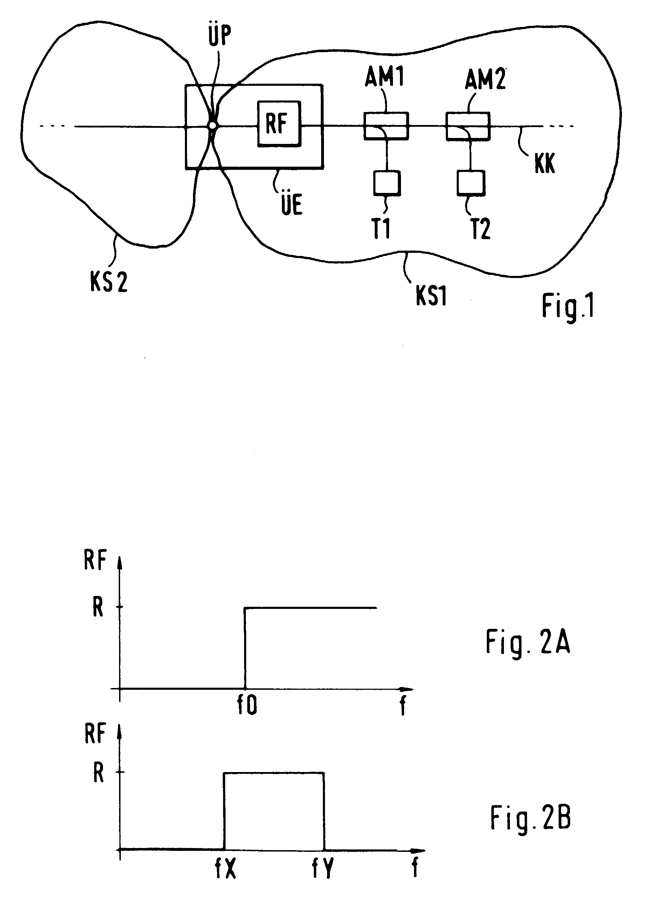

Figur 1 zeigt das Ausführungsbeispiel eines ersten Kommunikationssystems KS1 mit einem Breitbandübertragungsnetz KK, an das eine erste Teilnehmerstation T1 mittels eines ersten Anschlußmittels AM1 und eine zweite Teilnehmerstation T2 mittels eines zweiten Anschlußmittels AM2 angeschlossen sind. Das Breitbandübertragungsnetz KK ist in den vorliegenden Ausführungsbeispielen ein Koaxialkabelnetz und die Anschlußmittel AM1 und AM2 sind herkömmliche Antennensteckdosen. Die Teilnehmerstationen T1 und T2 sind gängige Endgeräte zum Senden oder Empfangen von Sprache, Bildern und Daten. Das erste Kommunikationssystem KS1 ist in den vorliegenden Ausführungsbeispielen ein Kommunikationssystem innerhalb eines Gebäudes.

Das erste Kommunikationssystem KS1 ist über eine Übergabeeinrichtung ÜE mit einem zweiten Kommunikationssystem KS2 verbunden. Diese Übergabeeinrichtung ÜE enthält einen Übergabepunkt ÜP, dem erfindungsgemäß ein Reflexionsmittel in der Form eines Reflexionsfilters RF vorgeschaltet ist. Das zweite Kommunikationssystem KS2 befindet sich in den vorliegenden Ausführungsbeispielen außerhalb des Gebäudes. Der Übergabepunkt ÜP stellt einen bekannten Übergang zwischen dem ersten und dem zweiten Kommunikationssystem dar. In dem zweiten Kommunikationssystem KS2 werden für die Übertragung der Breitbandsignale optische Glasfasern verwendet. In der Übergabeeinrichtung ÜE findet daher (in den Figuren nicht dargestellt) eine optisch-/elektrisch Wandlung der Signale statt.

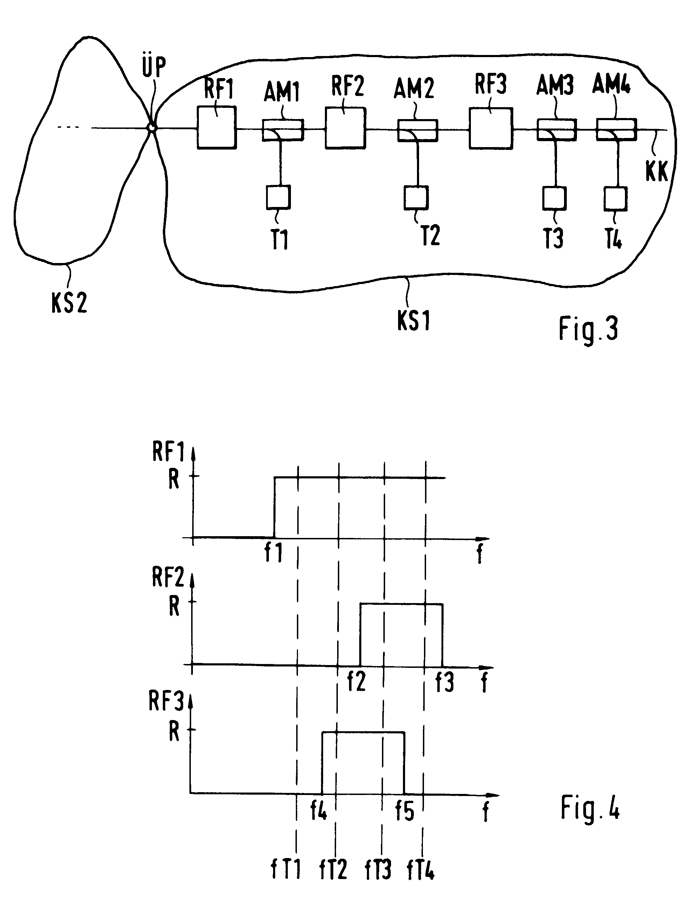

Eine solche Anordnung des ersten und zweiten Kommunikationssystems KS1 und KS2 wird beispielsweise für die Übertragung von analogen Fernsehsignalen verwendet, wie sie in dem Aufsatz "FITL CATV: Ein Übertragungssystem mit optischen Verstärkern für analoge TV-Signale" von W. Schmid, et al, Elektrisches Nachrichtenwesen, drittes Quartal 1993, Seiten 248 bis 259 beschrieben wird. Von einer nicht dargestellten Zentrale innerhalb des zweiten Kommunikationssystems KS2 können die Teilnehmerstationen T1 und T2 beispielsweise Kabelfernsehsignale empfangen. Andere Verteil- und Abrufdienste können ebenso über die beschriebenen Kommunikationssysteme KS1 und KS2 durchgeführt werden, wie beispielsweise Video-On-Demand oder aber auch Telefonie. Die Teilnehmerstationen T1 und T2 besitzen jeweils ein Signalisierungsmittel (Set-Top Box), um interaktiv angebotene Dienste in Anspruch nehmen und steuern zu können. Die Übertragung der Signale für die Durchführung der Verteil- und Abrufdienste oder der interaktiven Signalisierungssignale wird innerhalb eines festgelegten Frequenzbereichs ausgeführt. Dieser Frequenzbereich beträgt beispielsweise 5 - 30 MHz für die interaktiven Signalisierungssignale und 47 - 860 MHz für die Übertragung der Signale für die Verteil- und Abrufdienste von der Zentrale zu den Teilnehmerstationen. Derjenige Frequenzbereich, der für die Verteil- und Abrufdienste nicht benötigt wird, z. B. oberhalb 860 MHz, kann für eine Kommunikation zwischen den Teilnehmerstationen innerhalb des Gebäudes, d. h. innerhalb des ersten Kommunikationssystems KS1, benutzt werden. Dazu wird erfindungsgemäß in dem ersten Kommunikationssystem KS1 an dem Koaxialkabelnetz KK das Reflexionsfilter RF angebracht. Vorteilhafterweise ist das Reflexionsfilter RF an dem Übergabepunkt ÜP angebracht. Es ist allerdings ebenfalls möglich, das Reflexionsfilter an einer anderen Stelle des Kommunikationssystems KS1 anzuschließen. Dies wird später anhand der Figur 3 näher erläutert. Das Reflexionsfilter RF ist so gestaltet, daß es einen vorgegebenen Frequenzbereich hat, in dem es Signale aus dem ersten Kommunikationssystem KS1 in das zweite Kommunikationssystem KS2 und umgekehrt durchläßt.

Dieser Frequenzbereich kann für die Verteil- und Abrufdienste und die interaktiven Signalisierungssignale von den Teilnehmerstationen T1 und T2 zu Vorrichtungen innerhalb des zweiten Kommunikationssystems KS2 verwendet werden. Desweiteren hat das Reflexionsfilter RF einen vorgegebenen Frequenzbereich, in dem es Signale aus dem ersten Kommunikationssystem KS1, d. h. Signale von den Teilnehmerstationen T1 und/oder T2, reflektiert. Aufgrund der Tatsache, daß die als Anschlußmittel verwendeten herkömmlichen Antennensteckdosen Signale ausschließlich aus einer Richtung des Koaxialkabels auskoppeln und nur in eine Richtung einkoppeln können, ohne daß der Signalpegel des jeweiligen Signales sehr stark gedämpft wird, kann durch die Anordnung des Reflexionsfilters RF auf einfache Weise eine Kommunikation zwischen den Teilnehmerstationen T1 und T2 innerhalb des Frequenzbereichs, in dem das Reflexionsfilter RF Signale reflektiert, ermöglicht werden.

Die Figuren 2a und 2b, zeigen jeweils ein Beispiel einer idealisierten Kennlinie des Reflexionsfilters RF. Aufgetragen ist die Reflexion des Filters RF über die Frequenz. In der Figur 2a ist das Reflexionsfilter RF ein Tiefpass. Unterhalb der Grenzfrequenz f0 läßt das Reflexionsfilter RF Signale durch und oberhalb der Frequenz f0 werden Signale aus dem ersten Kommunikationssystem KS1 reflektiert. Die Figur 2b zeigt die alternative Ausführung des Reflexionsfilters RF als Bandpass, der innerhalb des Frequenzbereichs fX bis fY Signale aus dem ersten Kommunikationssystem KS1 reflektiert. Die Ausgestaltung des Reflexionsfilters RF hängt von dem jeweiligen Anwendungsfall innerhalb des ersten Kommunikationssystems KS1 und dem jeweiligen zugelassenen Frequenzbereich, in dem eine Reflexion der Signale nicht zulässig ist, ab.

Im folgenden wird ein Beispiel beschrieben, in dem in dem ersten Kommunikationssystem KS1 gemäß Figur 1 ein Reflexionsfilter mit einer Kennlinie gemäß Figur 2a, d. h. ein Tiefpass, verwendet wird. Unterhalb der Grenzfrequenz f0 des Reflexionsfilters RF werden die bekannten Verteil- und Abrufdienste in Abwärtsrichtung übetragen. Die Signalisierung der Teilnehmerstationen T1 und T2 zur Steuerung der Abrufdienste wird ebenfalls unterhalb der Frequenz f0 durchgeführt. Auf einer Frequenz oberhalb von f0 wird eine Sprach- und Bildkommunikation zwischen der ersten Teilnehmerstation T1 und der zweiten Teilnehmerstation T2 durchgeführt. Dazu sind die jeweiligen Sende- und Empfangsteile der beiden Teilnehmerstationen T1 und T2 auf diese Frequenz abgestimmt.

Es soll nun ein Signal von der ersten Teilnehmerstation T1 zu der zweiten Teilnehmerstation T2 übertragen werden. Dieses Signal wird von dem Sender der ersten Teilnehmerstation T1 ausgegeben und von der ersten Antennensteckdose AM1 in das Koaxialkabelnetz KK eingekoppelt. Aufgrund des Anschlusses der Antennensteckdose AM1 wird das ausgesandte Signal der ersten Teilnehmerstation T1 in Richtung des zweiten Kommunikationssystems KS2 in das Koaxialkabelnetz KK eingekoppelt. Streusignale bei der Einkopplung des von der ersten Teilnehmerstation T1 kommenden Signales in Richtung der zweiten Antennensteckdose AM2 sind aufgrund der starken Richtwirkung in der ersten Antennensteckdose AM1 zu vernachlässigen. Das in das Koaxialkabelnetz KK eingekoppelte Signal wird an dem Reflexionsfilter RF in das erste Kommunikationssystem reflektiert und über das Koaxialkabel KK zu der zweiten Antennensteckdose AM2 übertragen, die das Signal auskoppelt und zu der zweiten Teilnehmerstation T2 weiterleitet. In der zweiten Teilnehmerstation T2 wird das von der Teilnehmerstation T1 kommende Signal empfangen und weiterverarbeitet. Eine Übertragung eines Signales von der zweiten Teilnehmerstation T2 über das Koaxialkabel KK zu der ersten Teilnehmerstation T1 mittels Reflexion durch das Reflexionsfilter RF erfolgt auf entsprechende Weise.

Es ist auch möglich, die Sendefrequenzen der beiden Teilnehmerstationen T1 und T2 verschieden festzulegen. Die Empfänger der jeweiligen Empfängerstation T1 oder T2 müssen dann auf die jeweilige Sendefrequenz der anderen Teilnehmerstation abgestimmt werden. Dies kann beispielsweise durch eine vorher durchgeführte Signalisierung von der sendenden Teilnehmerstation zu der empfangenden Teilnehmerstation, mit der die jeweilige Sendefrequenz der empfangenden Teilnehmerstation mitgeteilt wird, ermöglicht werden.

Figur 3 zeigt ein zweites Ausführungsbeispiel des erfindungsgemäßen Kommunikationssystems mit mehreren Reflexionsfiltern, die an unterschiedlichen Stellen des Koaxialkabelnetzes KK angebracht sind. Die Figur 3 zeigt das erste Kommunikationssystem KS1 mit dem Koaxialkabelnetz KK, an das über die erste Antennensteckdose AM1 die erste Teilnehmerstation T1, über die zweite Antennensteckdose AM2 die zweite Teilnehmerstation T2, über eine dritte Antennensteckdose AM3 eine dritte Teilnehmerstation T3 und über eine vierte Antennensteckdose AM4 eine vierte Teilnehmerstation T4 angeschlossen ist. An dem Übergabepunkt ÜP hat das erste Kommunikationssystem KS1, wie im ersten Ausführungsbeispiel nach Figur 1, einen Übergang zu dem zweiten Kommunikationssystem KS2. An diesem Übergabepunkt ÜP ist ein erstes Reflexionsfilter RF1 angebracht. Zwischen der ersten Antennensteckdose AM1 und der zweiten Antennensteckdose AM2 ist ein zweites Reflexionsfilter RF2 und zwischen der zweiten Antennensteckdose AM2 und der dritten Antennensteckdose AM3 ein drittes Reflexionsfilter RF3 angebracht. Durch die Festlegung der Frequenzbereiche, in denen die Reflexionsfilter RF1, RF2 und RF3 Signale reflektieren, können die Teilnehmerstationen T1, ..., T4 zu Gruppen zusammengefaßt werden, innerhalb derer eine Kommunikation möglich ist.

Figur 4 zeigt ein Beispiel für die Frequenzgänge der Reflexionsfilter RF1, RF2 und RF3 nach Figur 3. In den drei Koordinatensystemen ist jeweils für die verschiedenen Reflexionsfilter die Reflexion über der Frequenz aufgetragen. Das erste Reflexionsfilter RF1 ist, wie im ersten Ausführungsbeispiel nach Figur 1, als Tiefpass ausgestaltet. Unterhalb einer Frequenz f1 läßt das Reflexionsfilter RF1 Signale durch und oberhalb der Frequenz f1 reflektiert es die Signale. Das zweite Reflexionsfilter RF2 ist als Bandpass ausgestaltet, der in einem Frequenzbereich f2 bis f3 Signale reflektiert. Das dritte Reflexionsfilter RF3 ist ebenfalls als Bandpass ausgestaltet, der in einem Frequenzbereich f4 bis f5 Signale reflektiert. Es gilt in dem vorliegenden Beispiel f1 < f4 < f2 < f5 < f3. In diesem Ausführungsbeispiel senden die Teilnehmerstationen auf verschiedenen Frequenzen. Das bedeutet, daß die Empfänger der an der Kommunikation beteiligten Teilnehmerstationen auf diese verschiedenen Frequenzen abgestimmt werden müssen. Die erste Teilnehmerstation T1 sendet auf einer Frequenz fT1, wobei f1 < fT1 < f4. Die zweite Teilnehmerstation T2 sendet auf einer Frequenz fT2, wobei f4 < fT2 < f2 ist. Die dritte Teilnehmerstation T3 sendet auf einer Frequenz fT3, wobei f2 < fT3 < f5. Die vierte Teilnehmerstation T4 sendet auf einer Frequenz fT4, wobei f5 < fT4 < f3.

Im vorliegenden Ausführungsbeispiel sendet die erste Teilnehmerstation T1 ein Signal auf der Frequenz fT1. Dieses Signal wird von der ersten Antennensteckdose AM1 in das Koaxialkabelnetz KK eingekoppelt und von dem ersten Reflexionsfilter RF1 reflektiert. Das reflektierte Signal wird von dem zweiten Reflektionsfilter RF2 durchgelassen und von der zweiten Antennensteckdose AM2 aus dem Koaxialkabelnetz ausgekoppelt und an die zweite Teilnehmerstation T2 weitergeleitet. Das reflektierte Signal wird darüberhinaus ebenfalls von dem dritten Reflexionsfilter RF3 durchgelassen und von der dritten Antennensteckdose AM3 zur Weiterleitung an die dritte Teilnehmerstation T3 und ebenfalls von der vierten Antennensteckdose AM4 zur Weiterleitung an die vierte Teilnehmerstation T4 aus dem Koaxialkabelnetz KK ausgekoppelt. Ein von der Teilnehmerstation T1 ausgesandtes Signal auf der Frequenz fT1 wird daher von allen Teilnehmerstationen empfangen. Die zweite Teilnehmerstation T2 sendet ein Signal auf der Frequenz fT2, daß von der zweiten Antennensteckdose AM2 in das Koaxialkabelnetz KK eingekoppelt wird. Dieses Signal wird von dem zweiten Reflexionsfilter RF2 durchgelassen allerdings von dem ersten Reflexionsfilter RF1 reflektiert. Das dritte Reflexionsfilter RF3 sperrt dieses von der zweiten Teilnehmerstation T2 ausgesandte Signal ebenfalls, so daß das Signal ausschließlich von der zweiten Teilnehmerstation T2 zu der ersten Teilnehmerstation T1 verteilt wird. Ein von der dritten Teilnehmerstation T3 auf der Frequenz f3 ausgesandtes Signal, wird von der dritten Antennensteckdose AM3 in das Koaxialkabelnetz KK eingekoppelt und von dem dritten Reflexionsfilter RF3 reflektiert. Dieses reflektierte Signal wird daraufhin von der vierten Antennensteckdose AM4 aus dem Koaxialkabelnetz KK zur Weiterleitung an die vierte Teilnehmerstation T4 ausgekoppelt. Ein von der vierten Teilnehmerstation T4 auf der Frequenz fT4 ausgesandtes Signal wird von der vierten Antennenstecksose AM4 in das Koaxialkabelnetz KK eingekoppelt, von dem dritten Reflexionsfilter RF3 durchgelassen und von dem zweiten Reflexionsfilter RF2 reflektiert. Dieses reflektierte Signal wird daraufhin von der zweiten Antennensteckdose AM2 zur Weiterleitung an die zweite Teilnehmerstation T2 aus dem Koaxialkabelnetz KK ausgekoppelt. Das von dem zweiten Reflexionsfilter RF2 reflektierte Signal der vierten Teilnehmerstation T4 wird von dem dritten Reflexionsfilter RF3 durchgelassen und anschließend von der dritten Antennensteckdose AM3 zur Weiterleitung an die dritte Teilnehmerstation T3 aus dem Koaxialkabelnetz KK ausgekoppelt.

Vorteilhafterweise ist es möglich, in dem ersten Kommunikationssystem KS1 abstimmbare Filter, z. B. LC - Tiefpaßfilter mit Varaktordioden als einstellbaren Kapazitäten, als Reflexionsfilter einzusetzen. Von den Teilnehmerstationen T1, ..., T4 können dann die Frequenzbereiche, in denen das jeweilige Reflexionsfilter Signale reflektiert, eingestellt werden. Mittels Tastendruck an einer Teilnehmerstation kann beispielsweise einem zentralen Steuermittel (nicht dargestellt) innerhalb des ersten Kommunikationssystems KS1 mitgeteilt werden, mit welchen anderen Teilnehmerstationen eine Kommunikation ermöglicht werden soll. Das zentrale Steuermittel stimmt daraufhin die Reflektionsfilter so ab, daß die gewünschte Kommunikation durchgeführt werden kann.

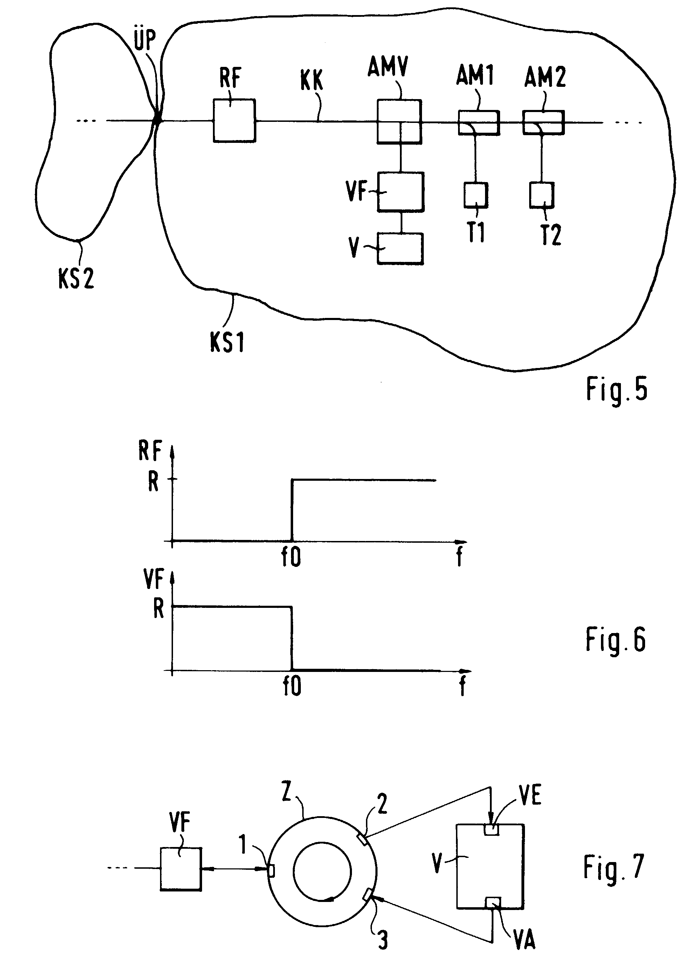

Figur 5 zeigt ein drittes Ausführungsbeispiel des erfindungsgemäßen Kommunikationssystems mit einem Verstärker zur Verstärkung der von dem Reflexionsfilter reflektierten Signale. Das erste Kommunikationssystem KS1 nach Figur 5 entspricht weitgehend dem ersten Kommunikatiossystem nach Figur 1. Zusätzlich zu dem ersten Kommunikationssystem KS1 nach Figur 1 ist im vorliegenden dritten Ausführungsbeispiel zwischen das Reflexionsfilter RF an dem Übergabepunkt ÜP und der ersten Antennensteckdose AM1 zum Anschluß der ersten Teilnehmerstation T1 an das Koaxialkabelnetz KK ein weiteres Anschlußmittel AMV zum Anschluß eines Verstärkers V zur Verstärkung der von dem Reflektionsmittel RF reflektierten Signale angebracht. Mit dem Verstärker V kann die Dämpfung der gesamten Übertragungsstrecke zwischen den Teilnehmerstationen T1 und T2 abgesenkt werden.

Das weitere Anschlußmittel AMV ist im vorliegenden Ausführungsbeispiel ein bidirektionales Anschlußmittel zum Ein- und Auskoppeln von Signalen in beide Richtungen des Koaxialkabelnetzes KK. Zwischen dem weiteren Anschlußmittel AMV und dem Verstärker V ist ein weiteres Filter VF angebracht. Dieses weitere Filter VF wird dazu benötigt, die Signale für die Verteil- und Abrufdienste und die interaktiven Signalisierungssignale der Teilnehmerstationen T1 und T2 auszufiltern, und nur diejenigen Signale durchzulassen, die von dem Verstärker V für die Kommunikation zwischen den Teilnehmerstationen T1 und T2 innerhalb des Kommunikationssystems KS1 verstärkt werden. Das weitere Filter VF ist daher vorzugsweise ein Komplementärfilter zu dem Reflexionsfilter RF.

Die Figur 6 zeigt ein Beispiel für die Frequenzgänge des Reflexionsfilters RF und des dem Verstärker V vorgeschalteten Filters VF nach Figur 5. In den beiden Koordinatensystemen ist jeweils die Reflexion des jeweiligen Filters über der Frequenz aufgetragen. Das Reflexionsfilter RF hat einen Tiefpasscharakter und läßt alle Frequenzen unterhalb der Grenzfrequenz f0 durch und reflektiert alle Frequenzen oberhalb dieser Grenzfrequenz f0. Das weitere Filter VF hat einen Hochpasscharakter und reflektiert alle Signale, die unterhalb der Grenzfrequenz f0 liegen. Die Signale, die oberhalb der Grenzfrequenz f0 liegen, werden von dem weiteren Filter VF durchgelassen.

Die Ein- und Auskopplung der zu verstärkenden Signale durch das weitere Anschlußmittel AMV wird über ein und dasselbe Kabel vorgenommen. Auf dem Kabel zwischen dem Verstärker V und dem weiteren Anschlußmittel AMV findet daher eine bidirektionale Übertragung statt. Um herkömmliche Verstärker, die einen getrennten Ein- und Ausgang haben, zur Verstärkung der reflektierten Signale verwenden zu können, wird vorteilhafterweise zwischen das weitere Filter VF und den Verstärker V ein Zirkulator Z geschaltet. Ein solcher Zirkulator ist beispielsweise aus Meinke/Gundlach, Taschenbuch der Hochfrequenztechnik, 4. Auflage, Kap. L 35 bekannt. Der Zirkulator hat 3 oder mehr Anschlüsse, die jeweils Ein- oder Ausgang sein können. Ein Signal kann innerhalb des Zirkulators nur in eine Richtung laufen. Im vorliegenden Ausführungsbeispiel hat der Zirkulator drei Anschlüsse 1, 2 und 3. Anschluß 1 ist mit dem weiteren Filter VF, Anschluß 2 mit dem Eingang VE des Verstärkers V und Anschluß 3 mit dem Ausgang VA des Verstärkers V verbunden. Das von dem Reflexionsfilter RF reflektierte und von dem weiteren Anschlußmittel AMV aus dem Koaxialkabelnetz KK ausgekoppelte Signal wird an dem Anschluß 1 des Zirkulators Z empfangen und von dem Zirkulator Z in Richtung des Anschlusses 2 weitergeleitet. An dem Anschluß 2 verläßt das Signal den Zirkulator Z und wird über den Eingang VE in den Verstärker V eingegeben und dort verstärkt. Über den Ausgang VA des Verstärkers V wird das verstärkte Signal zu dem Anschluß 3 des Zirkulators Z weitergeleitet und von diesem an seinem Anschluß 1 wieder ausgegeben. Das verstärkte Signal wird von dem weiteren Filter VF durchgelassen und anschließend von dem weiteren Anschlußmittel AMV in das Koaxialkabelnetz KK eingekoppelt.

Bei der Verwendung des Zirkulators ist darauf zu achten, daß dessen Betriebsfrequenzbereich größer als die Verstärkungsbandbreite des Verstärkers ist. Ansonsten ist es möglich, daß eine Rückkoppelung des verstärkten Signales über die direkte Verbindung zwischen dem Anschluß 3 und dem Anschluß 2 des Zirkulators Z vorkommen kann. Die Verstärkungsanordnung beginnt zu schwingen.

Durch die Verwendung der Reflexionsfilter, insbesondere der von den Teilnehmerstationen abstimmbaren Reflexionsfilter, zur Kommunikation innerhalb des Kommunikationssystems KS1 ergeben sich neue Möglichkeiten für die Verwendung von Protokollen (z.B. CSMA, Token Ring, etc.) für die Übertragung der Signale, da sich die Übertragungseigenschaften des Breitbandübertragungsnetzes steuern lassen.

Bei der Verwendung einer Paketübertragung über das Breitbandübertragungsnetz kann in dem Header ein Kennzeichen vorhanden sein, das einem Filter angibt, ob es die folgenden Pakete durchlassen oder reflektieren soll.

Die Anwendung der vorliegenden Erfindung ist keinesfalls auf die Verwendung in einem Kommunikationssystem mit einem Koaxialkabelnetz als Übertragungsmedium beschränkt. Die Erfindung kann ebenfalls beispielsweise in einem optischen Netz angewendet werden. Dazu stehen beispielsweise dielektrische Filter oder Fabry-Poirot-Filter als Reflexionsmittel zur Verfügung.

## Patentansprüche

1. Kommunikationssystem (KS1)
- mit einem Breitbandübertragungsnetz (KK) und
- mit Anschlußmitteln (AM1, ..., AM4) zum Anschluß von Teilnehmerstationen (T1, ..., T4) an das Breitbandübertragungsnetz (KK),
**dadurch gekennzeichnet**, daß das
Kommunikationsystem (KS1) ein Reflexionsmittel (RF) aufweist, das von wenigstens einer der Teilnehmerstationen (T1, ..., T4) kommende, durch das zugehörige Anschlußmittel (AM1, ..., AM4) in das Breitbandübertragungsnetz (KK) eingekoppelte, vorgegebene Signale reflektiert.

2. Kommunikationssystem nach Anspruch 1,
dadurch gekennzeichnet, daß es einen Übergang (ÜP) zu einem anderen Kommunikationssystem (KS2) aufweist und das Reflexionsmittel (RF) an diesem Übergang (ÜP) angebracht ist.

3. Kommunikationssystem nach Anspruch 1,
dadurch gekennzeichnet, daß es mehrere Reflexionsmittel (RF1, ..., RF3) aufweist und diese mehreren Reflexionsmittel (RF1, ..., RF3) an verschiedenen Stellen des Kommunikationssystems (KS1) angebracht sind.

4. Kommunikationssystem nach Anspruch 1,
dadurch gekennzeichnet, daß das Reflexionsmittel (RF) ein erstes Filter ist, das einen Frequenzbereich hat, in dem es Signale reflektiert und der von wenigstens einer der Teilnehmerstationen (T1, ..., T4) aus abstimmbar ist.

5. Kommunikationssystem nach Anspruch 1,
dadurch gekennzeichnet, daß es einen Verstärker (V) aufweist, der die von dem Reflexionsmittel (RF) reflektierten Signale verstärkt.

6. Kommunikationssystem nach Anspruch 5,
dadurch gekennzeichnet, daß zwischen dem Reflexionsmittel (RF) und dem Verstärker (V) ein Zirkulator (Z) angebracht ist, über den dem Verstärker (V) die reflektierten Signale zugeführt werden.

7. Kommunikationssystem nach Anspruch 5,
dadurch gekennzeichnet, daß dem Verstärker (V) ein zweites Filter (VF) vorgeschaltet ist.

8. Kommunikationssystem nach Anspruch 7,
dadurch gekennzeichnet, daß das zweite Filter (VF) komplementär zu dem Reflexionsmittel (RF) ist, so daß die reflektierten Signale durchgelassen und die nicht reflektierten Signale gesperrt werden.

9. Kommunikationssystem nach Anspruch 1,
dadurch gekennzeichnet, daß das Breitbandübertragungsnetz (KK) ein Koaxialkabelnetz ist und das die Anschlußmittel (AM1, ..., AM4) Antennensteckdosen sind.

10. Übergabeeinrichtung (ÜE) für ein Kommunikationssystem (KS1) nach Anspruch 1, über die das Kommunikationssystem (KS1) mit einem anderen Kommunikationssystem (KS2) verbunden ist,
**dadurch gekennzeichnet**, daß die Übergabeeinrichtung (ÜE) das Reflexionsmittel (RF) aufweist.
